# EUROPEAN PATENT SPECIFICATION

(11) **EP 1 433 407 B1**
(45) Date of publication and mention of the grant of the patent: **09.05.2007**
(21) Application number: 02028887.4
(22) Date of filing: 23.12.2002
(51) Int. Cl.: A47J 41/00

(54) **A thermally insulatable vessel and a thermally insulatable vessel system**
Ein thermisch isolierendes Gefäss und ein thermisch isolierendes Gefäss-System
Une enceinte isolable thermiquement et un systéme d'enceint isolable thermiquement

(43) Date of publication of application: 30.06.2004
(73) Proprietor: European Organisation for Nuclear Research CERN, 1211 Geneva 23 (CH)
(72) Inventor: Tyrväinen, Harri, 1217 Meyrin (CH); Benvenuti, Christoforo, 01280 Moens (FR)
(74) Representative: Weber-Bruls, Dorothée

(56) References cited:
- WO-A-92/00033
- DE-A- 10 061 239
- DE-A- 10 121 444
- DE-A- 19 614 112

## Description

The present invention relates to a lid for a thermally insulatable vessel.

Thermos bottles are widely used in household and sports, such as hiking, as well as in research laboratories, also known as Dewar containers. These bottles have in common that they use an evacuated double-walled system for thermal insulation, whereby the inner wall is usually made from glass or metal and the outer wall is usually made from metal. Glass thermos bottles are superior to metal thermos bottles with respect to heat insulation properties, but are poor in resistance to mechanical shock. The inferior thermal insulation by metal thermos bottles which are usually made from stainless steel is mainly due to gases such as hydrogen which are liberated from the interior of the metal into the vacuum thereby progressively worsening the vacuum with time. In order to provide a metal thermos bottle which has high thermal insulating properties and keeps its heat retaining performance constant for a long period of time, in U.S. 4,427,123 a stainless steel thermos bottle is disclosed the inner surfaces of the double-walled construction comprising a metal deposit which comprises, in order of deposition, a strike nickel layer, a semi-bright nickel layer, a tri-nickel layer, a bright nickel layer and an outer layer selected from the group consisting of silver and copper. The manufacture of such thermos bottles requires multiple steps, and is therefore rather expensive.

In U.S. 6,164,469 the temperature of the inner container of a thermal insulated bottle is determined with the help of a heat-sensitive band in the form of a thin strip of plastics material which is attached or glued to the outer surface of the inner container. For example, several liquid crystal dots can be distributed along the band each adapted to change color when reaching a different predetermined temperature. However, in order to visualize the temperature change at least the portion adjacent to the heat-sensitive band of the housing of the thermos bottle has to be made from a transparent material such as a transparent plastics material, e.g., polytheylene, polypropylene, PVC and polycarbonate. If the complete housing is made from these materials the resulting thermos bottle again has little resistance to mechanical shocks as is also the case, at least in part, if only a sector of the housing is made from these materials. In addition, the manufacture of a multi-component housing is much more difficult than that of a housing made completely from either glass or metal, especially as a vacuum has to be maintained over a long period. Another disadvantage is that the heat-sensitive band is directly bound to the inner container so that thermal energy can also be transferred from the outer wall of the inner container to an article in the evacuated space.

In DE 196 14 112 A1 a typical thermos bottle is disclosed the double-walled system of which is interrupted at least at one discrete area so that there is a direct contact between the inner container and the outer housing thereby allowing to determine the temperature inside the thermos bottle. Alternatively, a temperature sensor is placed directly on the outer surface of the inner container and is wired to a display on the outer housing to indicate the temperature. However, both variants allow for a conductive dissipation of heat from the inner container to the outside from which a progressive cooling of, for example, a heated liquid inside the bottle results.

According to DE 43 43 919 A1 a thermal sensor can be applied to the outer housing of a thermos bottle in the area where the inner container and the outer housing are joined, that is at the collar of the bottle. Here, the thermal conductivity across the joint is used to determine the temperature of the inner container, usually by use of a so-called NTC-resistance. However, the temperature determined in this manner rather gives a rough estimate of the temperature of a liquid at the bottom of the inner container.

In DE 100 61 239 A1 a thermos bottle is disclosed having a lid which is equipped with an IR temperature sensor and a display unit. The temperature sensor is an integral part of the lower surface of the lid facing the interior of the thermos bottle. The display unit is adapted to visualize the temperature of the liquid content of the vessel. With such a thermos bottle a user shall be provided with information about the taste and temperature of the thermos bottle without the need to open it.

Therefore, it would be desirable to obtain a thermos bottle which does not exhibit the disadvantages as experienced with those thermos bottles already known.

It has been an object of the present invention to provide a thermos bottle or a thermally insulatable vessel which allows for a reliable and easy as well as accurate determination of the temperature of the inner container and its content and which in addition is adapted to be resistant to mechanical shocks and which is also capable of maintaining a high and constant vacuum over prolonged periods of time.

This object has been solved by a lid according to the features of claim 1.

Accordingly the present invention also encompasses a lid, in particular a lid which is adapted to seal a thermally insulatable vessel, such as those vessels which are according to the present invention, which comprises a top part which, at least partly, is accessible and/or visible from above, and a bottom part which comprises a lower surface area which, at least partly, is accessible from beneath, in particular after a vessel has been sealed with said lid, said lower surface area being provided with at least one window which is at least transparent to IR radiation, or with or a wall or wall segment with an emissivity of IR radiation and/or heat conductivity sufficient to allow for an accurate and reliable temperature determination, especially made from a high conductivity material, in particular from aluminum, said lid at least further comprising at least one gas tight and/or liquid tight hollow space, at least one side of which is, at least partially, formed by said window or by said wall or wall segment, said window or wall or wall segment, thereby at least partially confining said hollow space and forming a part of the confinement of said hollow space, and an IR temperature sensor, in particular a thermopile thermosensor in the form of a, in particular micromachined, thin film chip, in particular adapted to exploit the Seebeck effect, which is arranged in the hollow space or at or in the inner wall of said hollow space, in particular directly opposite said window or wall or wall segment, and which is adapted to detect IR radiation which enters the hollow space in particular via said window or wall or wall segment.

In accordance with the present invention it is proposed that the IR temperature sensor is a thermopile thermal sensor, in particular in the form of a, in particular micromachined, thin film chip, in particular adapted to exploit the Seebeck effect.

In general the thermopile thermal sensor comprises two or more thermocouples, in particular connected in series.

The Seebeck-effect makes use of the fact that if a closed loop is formed by joining the ends of two stripes of dissimilar metals and the two junctions of the metals are at different temperatures, an electromotive force, or voltage, arises that is proportional to the temperature difference between said junctions. Such a device can also be called a thermocouple. A number of a thermocouples, i.e. two or more thermocouples, when connected in series, are generally known also as thermopiles.

Further provisions may be made that the IR temperature sensor is a micro-electro-mechanical system (MEMS).

The micro-electro-mechanical system technology in general makes use of silicon microfabrication techniques and is well suited to make smaller, lighter and more functional electro-mechanical devices or machines. Micro-electro-mechanical systems in general comprise both electrical and mechanical components.

Accordingly the present invention also encompasses a lid, in particular a lid which is adapted to seal a thermally insulatable vessel, such as those vessels which are according to the present invention, which comprises a top part which, at least partly, is accessible and/or visible from above, and a bottom part which comprises a lower surface area which, at least partly, is accessible from beneath, in particular after a vessel has been sealed with said lid, said lower surface area being provided with at least one window which is at least transparent to IR radiation, or with or a wall or wall segment with an emissivity of IR radiation and/or heat conductivity sufficient to allow for an accurate and reliable temperature determination, especially made from a high conductivity material, in particular from aluminum, said lid at least further comprising at least one gas tight and/or liquid tight hollow space, at least one side of which is, at least partially, formed by said window or by said wall or wall segment, said window or wall or wall segment, thereby at least partially confining said hollow space and forming a part of the confinement of said hollow space, and an IR temperature sensor, in particular a thermopile thermosensor in the form of a, in particular micromachined, thin film chip, in particular adapted to exploit the Seebeck effect, which is arranged in the hollow space or at or in the inner wall of said hollow space, in particular directly opposite said window or wall or wall segment, and which is adapted to detect IR radiation which enters the hollow space in particular via said window or wall or wall segment.

In a further embodiment the emissivity of the wall or wall segment at the lower surface area can even be increased by applying a coating which comprises a non-metallic material, e.g. made from plastics and/or any organic paint or any other high emissivity material onto said wall or wall segment inside the liquid-tight hollow space of the lid, i.e. the interior surface of the wall or wall segment which is directing towards the hollow space inside the lid.

By using a lid according to the invention there is provided another means to determine the temperature of the content, especially a liquid, inside a vessel, in particular a thermally insulatable vessel, such as a thermos bottles. The above lid according to the invention can be used with conventional vessels or thermally insulatable vessels as well as with those thermally insulatable vessels which are according to the present invention.

Also according to the invention said lid comprises a printed circuit board and/or a signal conditioning unit and/or a power supply unit, in particular a battery, accumulator and/or solar cell, and/or a display driver, in particular a LCD display driver, and/or a display, in particular a low current consumption display like a LCD display, or any other display, said display being in particular incorporated into the surface of the top part of the lid.

In a further aspect of the present invention a lid is provided which in particular in its peripheral side portion comprises a heat conductive material, in particular a metal, at least part of which is attachable with an energy supply, in particular a Peltier element and/or a heating resistor. As a heating resistor a resistor film and/or a resistive wire can for example be employed. The shape and size of the heating resistor can be varied to a great extent.

In another aspect of the present invention a lid is provided, which in particular is adapted to seal a thermally insulatable vessel, and which comprises, in particular in its peripheral side portion, or in its bottom part and extending from said bottom part inside said lid, a heat conductive material, in particular a metal, at least part of which is connected to an energy supply, in particular a Peltier element and/or a heating resistor, in particular located in the top part of the lid.

The heat conductive material in one embodiment is arranged in the lid as such that at least part of this material is in contact with or is adjacent to the collar of a vessel when placed inside the opening of said vessel. In a preferred alternative embodiment the heat conductive material of the lid is arranged as such that it does not have any contact with the vessel material, thereby warming or cooling the content of the vessel in a direct manner, and not via a part of the vessel housing. In general, in the preferred alternative embodiment the heat conductive material can be placed inside the lid in such a way that on the one hand it is in contact or can be brought in contact with an energy supply, such as a Peltier element or a heating resistor, and that on the other hand it is or can be brought into direct contact with the content of a vessel.

Further, the lid according to the invention in addition can comprise at least one energy supply, in particular a Peltier element, connected to or adjacent to at least a part of a first heat conductive material, and in particular to a second heat conductive material which is not in direct contact with the first heat conductive material and which is located at the outer surface or periphery of said lid.

Also, other suitable energy supplies such as a heating resistor can be used within the lid in order to influence the temperature of the heat conductive material thereby having an impact on the temperature of a vessel material.

The energy supply such as a Peltier element or a heating resistor, irrespective of whether these devices are part of a lid or a cup, are generally suited to be provided with at least one power inlet. In such a way the energy supply can be connected to an external energy source, e.g. to the adapter of a car cigarette lighter, or to a battery-charger.

According to another aspect of the invention a lid is provided which comprises a top part which, at least partly, is accessible and/or visible from above, a peripheral side portion and a bottom part which comprises a lower surface area which, at least partly, is accessible from beneath, in particular after a vessel has been sealed with said lid, wherein said lid comprises in its interior part a temperature sensor module which extends from the lower surface area of the lid towards, in particular up to, the top part of the lid, and which is adapted to be fixedly inserted into the lid in a fluid-tight manner having at least one fluid-tight junction, said module comprising a lower surface area being provided with at least one window which is at least transparent to IR radiation, or with a wall or a wall segment with an emissivity of IR radiation and/or heat conductivity sufficient to allow for an accurate and reliable temperature determination, especially made from a high conductivity material, in particular from aluminum, or representing such a window, wall or wall segment, the wall or wall segment in particular being at least partially provided with a coating which comprises a non-metallic material on its interior surface, said module at least further comprising at least one fluid-tight, e.g. gas tight and/or liquid tight hollow space, at least one side of which is, at least partially, formed by said window or wall or wall segment, said window, or wall or wall segment, thereby at least partially confining said hollow space and forming a part of the confinement of said hollow space, and an IR temperature sensor, in particular a thermopile thermosensor in the form of a, in particular micromachined, thin film chip, in particular adapted to exploit the Seebeck effect, which is arranged in the hollow space or at or in the inner wall of said hollow space, in particular directly opposite said window, or wall or wall segment, and which is adapted to detect IR radiation which enters the hollow space in particular via said window, or wall or wall segment. Furthermore, the invention encompasses a temperature sensor module as outlined above. Such a temperature sensor module, once manufactured, offers the advantage that it can be incorporated into a large variety of different lids. Thus, irrespective of the size or the shape of a lid an identical temperature sensor module can be employed each time. By using a standardized temperature sensor module the manufacture of lid systems, in particular for thermos bottles, can be greatly facilitated, thereby also reducing the production costs. It is therefore of great advantage that the temperature sensor module of the invention can be pre-manufactured. Also, mass production of the above lid systems is easily accessible. In general, care has to be taken that the temperature sensor module according to the invention fits into the inner part of a lid so that it can be joined to said lid in a fluid-tight manner, preventing liquid and/or gas to enter from the top or from the bottom.

It has been surprisingly found that a remote temperature measurement of contents within a thermos bottle can also be monitored, even in a continuous manner, with a measuring system based on an IR temperature sensor being located in the lid of a thermos bottle. In order to readjust the temperature of the content within a thermos bottle it has also surprisingly been found that it already suffices to provide for a heat conductive material in the lid of a thermos bottle which is connected to or adjacent to an energy supply such as a Peltier element and/or a heating resistor, which can be an integral part of the lid or which can be part of a separate cup. With at least one Peltier element and/or heating resistor in a lid according to the invention the vessel content can be heated and also cooled down. Said vessel content can thus be conveniently maintained at a constant temperature. Thus, it is possible to not only continuously measure the temperature of a thermos bottle but also to readjust the temperature of its content when still inside the sealed bottle.

It also has surprisingly been found that a temperature sensor module comprising an IR measuring system can be manufactured as one unit and may also include a display and a power supply like a solar cell. Such a module can be fixed to or inserted into any existing lid, and thus can be inserted in the production process of any existing lid, usually applying only marginal modifications. Thus, a lid according to the invention can even be obtained using or starting from known or conventional lids of thermos bottles.

In the following the present invention will be described in more detail with regard to several drawings without being confined to the embodiments depicted therein.
- Fig. 1: shows a cross-sectional view along the entire length of a thermos bottle not according to the present invention;
- Fig. 2: presents an enlarged sectional view of the bottom part of the thermos bottle according to Fig. 1;
- Fig. 3: depicts a lid which is according to the invention;
- Fig. 4a): depicts another embodiment of a lid which is not according to the invention;
- Fig. 4b): depicts another embodiment of a lid which is not according to the invention;
- Fig. 4c): depicts another embodiment of a lid which is not according to the invention;
- Fig. 4d): depicts another embodiment of a lid which is not according to the invention;
- Fig. 5a): shows another embodiment of a lid not according to the invention;
- Fig. 5b): shows another embodiment of a lid not according to the invention;
- Fig. 6: shows another embodiment of a lid not according to the invention;
- Fig. 7: shows another embodiment of a lid according to the invention.

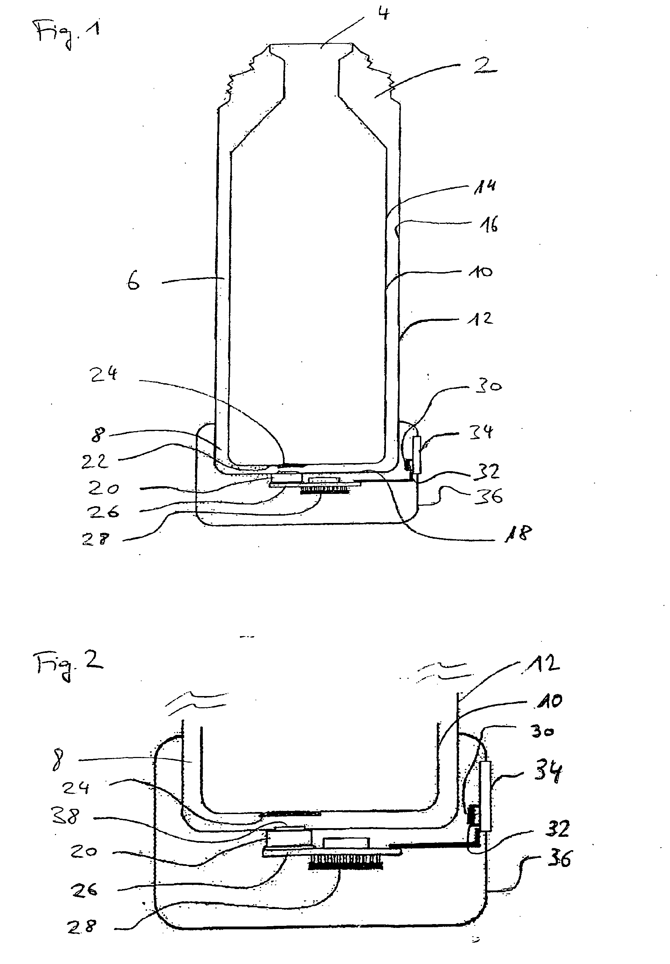

From Fig. 1 a thermos bottle 2 can be derived having an opening 4, an intermediate part 6 and a bottom part 8. Thermos bottle 2 further comprises an inner container 10 and an outer housing 12, for reason of example both made from stainless steel and only being connected at the opening or collar 4 of the thermos bottle 2 across a very small area. In the space between the outer surface 14 of the inner container 10 and the inner surface 16 of the outer housing 12 a vacuum is maintained. At the bottom 18 of the outer housing 12 an IR temperature sensor is fixedly attached so that the surface of the sensor 20 is opposite the bottom 22 of the inner container and essentially aligned in parallel to this bottom surface. The IR temperature sensor 20 is joined to the bottom of the outer housing 18 in an air tight fashion. For example, the IR temperature sensor 20 can be placed in a hole of the outer housing 18 which is then hermetically closed by glueing, soldering or welding. To increase the emissivity and thereby the accuracy of the temperature measurement a non-metallic coating 24 is put on a restricted area at the bottom 22 of the inner container, preferably just opposite the IR temperature sensor 20. By placing the IR temperature sensor 20 at the bottom of the thermos bottle 2 the temperature of the content within the bottle can be monitored continuously without opening the vessel. As an IR temperature sensor 20 a micromachined micro-electro-mechanical system (MEMS) in the form of a thin film thermopile thermo sensor can be used. The inner surface 16 of the outer housing 12 and the outer surface 14 of the inner container 10 are preferably polished in order to reduce emissivity. The measuring system further comprises a printed circuit board 26, a signal conditioning unit 28 which converts sensor signals to temperature, a power source 30, e.g., in the form of a small battery or a solar cell, a display driver 32 and a display 34, for example a LCD display. For example, as a measuring device can be used as a thermometer module, which performs signal conditioning, linearisation and ambient temperature compensation. This module is preferably built around an IR amplifier-interface, which regularly uses high performance, chopper stabilized amplifiers, thereby providing excellent noise performance. As the sensing element a discrete IR thermopile can be used. All the components of the measuring system can be assembled inside a cover 36, for example made from plastics, which is preferably located at the bottom part 8 of the thermos bottle 2. The cover 36 is designed in such a way to be able to provide a secure positioning of the thermos bottle 2.

In Fig. 2 for the reason of clarity an enlarged section of the bottom part 8 of the thermos bottle 2 is shown. As can be derived from Fig. 2 the non-metallic coating 24 at the bottom of the inner housing 10 is essentially aligned in parallel to the sensor surface 38 of the IR temperature sensor 20. The size of the non-metallic coating 24 is adapted to the sensor surface 38 thereby allowing for optimal results. As can also be derived from Fig. 2 it already suffices to incorporate the sensor surface 38 of the IR temperature sensor 20 into the wall of the outer housing 12 thereby minimizing the hole in this housing. All other parts of the IR temperature sensor device 20 can then be attached to or placed outside the outer housing 12.

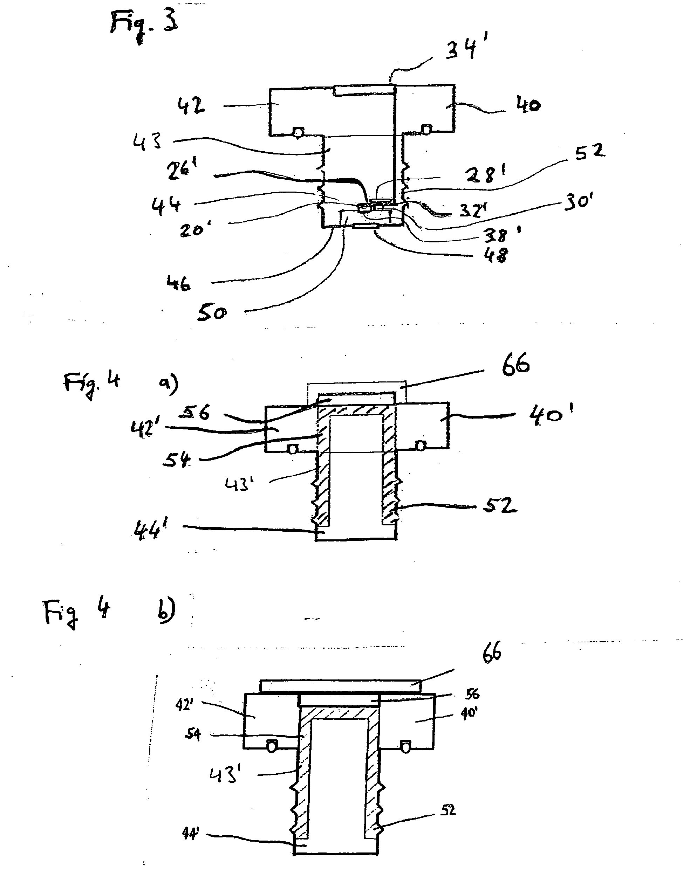

The thermos bottle 2 can be closed with a lid 40 according to the invention as depicted in Fig. 3. The lid 40 comprises a top part 42 adapted to manually place the lid 40 into the opening 4 of thermos bottle 2, and an intermediate and bottom part 43 and 44 which is adapted to provide a tight fit when being placed in the opening 4. Lid 40 has at its lower surface 46 of its bottom part 44 a window 48 which is transparent at least for IR radiation. Behind the window 48 and within the bottom part 44 of lid 40 is a hollow space 50 which is preferably evacuated. In this hollow space 50 an IR temperature sensor 20' or at least the sensor surface 38' of said sensor 20' is located opposite window 48 in order to be adapted to detect IR radiation coming from within the thermos bottle 2 through window 48. As with the sensor surface 38 in the bottom 18 of the outer housing 12 also IR sensor 20' or sensor surface 38' can be incorporated into the wall of the hollow space 50. The measuring system, comprising a printed circuit board 26', a signal conditioning unit 28', a power source 30', a display driver 32' and a display 34' is placed within lid 40. When the display 34' is incorporated into the surface of the top part 42 of lid 40 the temperature of the content inside the thermos bottle 2 can be monitored very conveniently. As the hollow space 50 is also liquid tight the integrity of the sensor surface 38' is not destroyed by the content of the thermos bottle 2. Also, this allows for monitoring the temperature of for example minor amounts of a liquid left in the thermos bottle by turning the bottle upside down when the lid 40 is hermetically fastened to the opening 4 of the thermos bottle 2. Another advantage of lid 40 is that it can be used with all known thermos bottles or even any other conventional bottles or receptacles, especially if a tight fit with their openings can be arranged.

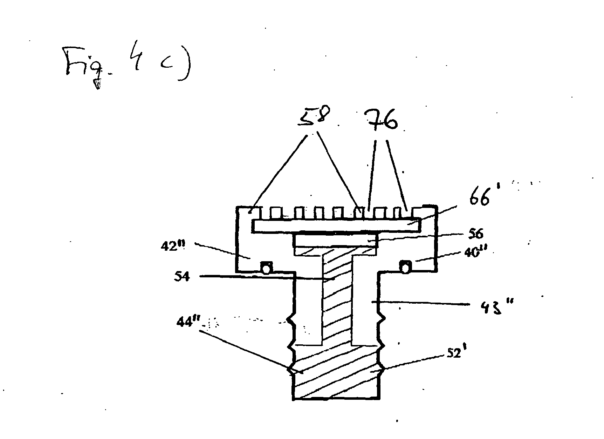

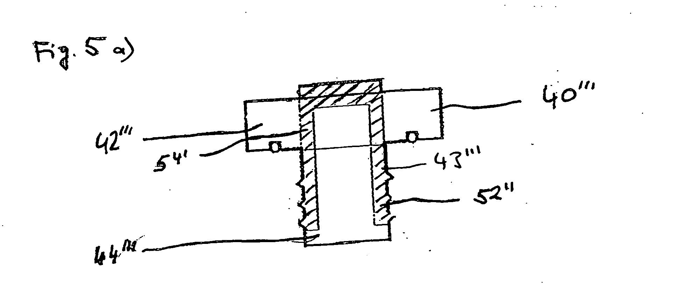

In Fig. 4a) an embodiment of a lid 40' not according to the invention is shown. Lid 40' comprises a top part 42' and an intermediate and a bottom part 43' and 44' whereby at least some sections, preferably at least of the peripheral side portion 52 of the intermediate and bottom part 43' and 44', comprise a material or materials with high conductivity of heat such as aluminum. As can be seen from Fig. 4a) the heat conductive material 54 can have the form of a cylinder, one upper end of which can be closed. The outer walls of this cylinder can preferably simultaneously form part of the outer surface of the peripheral side portion 52 of the intermediate part 43' and the bottom part 44'. The rest, i.e. the inner part of the intermediate and/or the bottom part 43' and 44' of the lid may also comprise the same or another heat conductive material, or, any other material with an inferior thermal conductivity, for example plastics, wood or cork. Attached to especially the upper, in particular closed, part of the cylinder 54 or to the heat conductive material at the bottom part, resp., is a Peltier element 56 with which the temperature of the adjacent heat conductive material 54 can be manipulated. Via lid 40', thus, energy can be transferred to or from a thermos bottle thereby either increasing or decreasing the temperature of the content within said thermos bottle. Preferably, the Peltier element 56 is regulated automatically by a control unit (not shown) which also monitors the temperature inside the thermos bottle with the aid of a IR temperature sensor 20 according to a thermos bottle of the invention. The Peltier element 56 is embedded on its upper side, in particular as far as it is not attached to the heat conductive material 54 with another heat conductive material 66 which forms at least part of the top part 42' of lid 40'. This heat conductive material 66 acts as a heat sink for a most proper functioning of a Peltier element system. The Peltier element system 56 is adapted to be leak tight. Also, the Peltier element system regularly is insulatable or sealed, in particular in a manner that no moisture can enter (s.a. Fig. 4b). In another embodiment the heat conductive material can be covered or embedded, completely or partially, by a thermally insulating material (not shown).

In Fig. 4c) another embodiment of a lid 40" not according to the invention is depicted. Lid 40" comprises a top part 42" and a bottom part 44". Different form the embodiments as shown in Figs. 4a) and 4b) only the bottom part 44" but not the intermediate part 43" is provided with a material or materials with high conductivity of heat, e.g. aluminum, which extends also to the its peripheral side walls 52'. As a consequence, the peripheral side walls of the middle part 43" of the lid 40" of Fig. 4c) do not comprise any heat conductive material, thereby furnishing a lid the heat conductive bottom part 44" of which does not have any contact with the vessel housing when placed inside the vessel opening. However, inside the middle part of the lid 40" the heat conductive material extends towards a Peltier element 56 located in the top part 42" of the lid. As with the lid of Fig. 4b) a heat conductive plate 66' made of high thermal conductive material is placed in close contact on top of the Peltier element 56. Both, the Peltier element 56 and the heat conductive material 66', which acts as a heat sink, are embedded in the top part 42" of the lid 40", thereby being covered by a thermally insulating material 58 which ensures a safer handling. In order to increase the effectiveness of the heat sink the insulating material 58 is provided with a number of holes 76 which extend directly to or adjacent to plate 66', in particular from above.

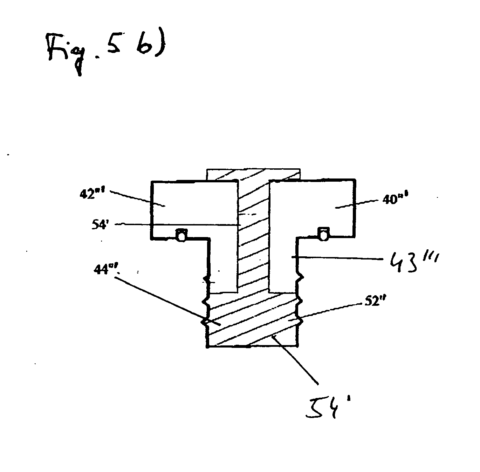

In Fig. 5a) a lid 40''' not according to the invention is shown which again comprises a top part 42''' and a bottom part 44''' and which is adapted to fit into the opening 4 of a thermos bottle 2. Similar to lid 40' the peripheral part 52" of lid 40"' comprises a heat conductive material which extends from the bottom part 44"' along the intermediate part 43"' to the top part 42''' of lid 40"'. The top part of cylinder 54' is at least slightly extending above the top surface of top part 42'''. This allows for a energy source, for example a Peltier element or a heating resistor, e.g. integrated in a cup, to be brought in contact with the heat conductive material of lid 40'''. Therefore, although lid 40''' does not contain any energy source itself it nevertheless allows for influencing the temperature of the content within a thermos bottle. Apart from a thermos bottle 2 according to the invention also conventional thermos bottles can be used with lid 40"'.

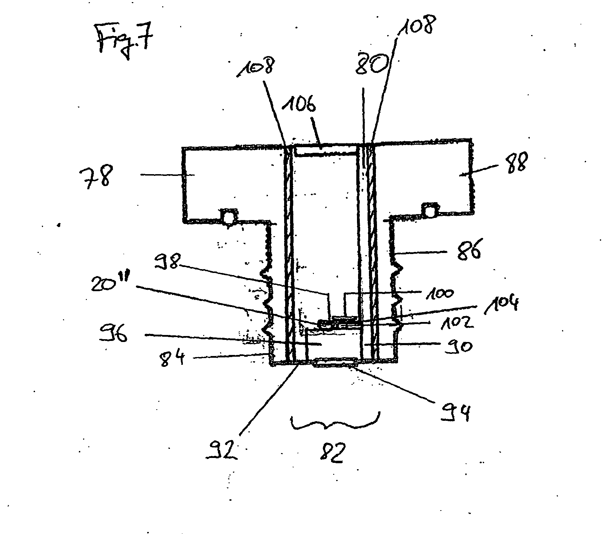

Fig. 5b) shows a lid 40''' not according to the invention which is similar in function to lid 40''' of Fig. Fig. 5a). As with lid 40" of Fig. 4c) only the bottom part 44" is provided with a heat conductive material which also extends to its peripheral side portion 52", i.e. there is no continuous heat conductive material at the side portion of the middle part 43''' of the lid 40'''. The heat conductive material 54' extends from the bottom part 44''' to the top part 42''' inside the middle part 43''' and the top part 42''' of the lid 40''' thereby being regularly embedded in an insulating material. The heat conductive material 54' also covers at least a part of the top surface of the top part 42''' of the lid 40"', which in this way can be easily brought in contact with an energy source such as a Peltier element or a heating resistor, e.g. in a cup of a vessel (as shown in Figs. 7a) and 7b)). The design of lid 40''' according to Fig. 5 b) ensures that it is not the thermos bottle which is heated or cooled down but only the content of said thermos bottle which is in contact with the heat conductive material at the bottom of the lid.

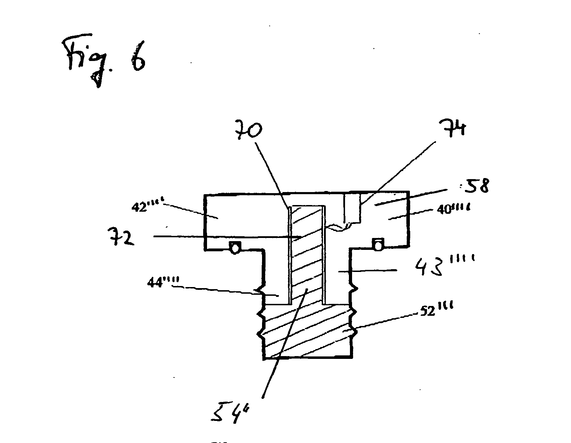

In Fig. 6 a lid 40'''' not according to the invention is shown which provides for a heat conductive material which is embedded inside the middle part of the lid and which also forms a part of the bottom part 44"" of said lid where it is part of the peripheral wall portions 52"'. Inside the middle part of the lid 40"" the heat conductive material 54" extends towards the upper surface of the top part 42"" of the lid. These portions of the heat conductive material in the middle and top part 43''' and 42''' of the lid do not come close to the outer walls of said lid. A heat resistor 70 is in close vicinity to and located around the interior portion 72 of the heat conductive material which has the form of a cylinder according to Fig. 6. The material 58 of the lid 40'''' which surrounds the interior portion 72 and the heat resistor 70 is preferably made from a material with thermal insulating properties. The heating resistor is connected to a power inlet connector 74 in order to be able to be connected to a power supply unit (not shown).

In Fig. 7 another embodiment of a lid 78 according to the invention is shown which can, for example, also be used with a thermos bottle. Lid 78 comprises a temperature sensor module 80 which has been inserted into the interior part 82 of said lid thereby extending from the bottom part 84, through the intermediate part 86 to the top part 88 of the lid. Module 80 has at its lower surface 92 of its bottom part 90 a window 94 which is transparent at least for IR radiation. Behind the window 94 and within the bottom part 90 of module 80 is a hollow space 96 which is preferably evacuated. In this hollow space 96 an IR temperature sensor 20" or at least the sensor surface of said sensor 20" is located opposite window 94 in order to be adapted to detect IR radiation coming for example from within a thermos bottle through window 94. The measuring system, comprising for example a printed circuit board 98, a signal conditioning unit 100, a power source 102, a display driver 104 and a display 106 is placed within module 80. When the display 106 is incorporated into the surface of the top part of the module 80 the temperature, for example, of the content inside a thermos bottle can be monitored very conveniently. The size and the form of the module 80 is adapted to be introduced into a hole in the inner part of lid 78 such that a liquid tight junction 108 between the outer side wall or walls of module 80 and the lid can be established, e.g. by gluing, welding or the like. As with lid 40 also lid 78 can not only be used with a thermos bottle 2 which is according to the invention, but also with all known thermos bottles or even any other conventional bottles or receptacles, especially if a tight fit with their openings can be arranged.

The features disclosed in the foregoing description, in the claims and/or in the accompanying drawings may, both separately and in any combination thereof, be material for realizing the invention in diverse forms thereof.

### Reference List

- 1: vessel system
- 2, 2': thermos bottle
- 4: opening of thermos bottle 2
- 6: intermediate part of thermos bottle 2
- 8: bottom part of thermos bottle 2
- 10: inner container
- 11: hollow space
- 12: outer housing
- 14: outer surface of inner container 10
- 16: inner surface of outer housing 12
- 18: bottom of outer housing
- 20, 20', 20": IR temperature sensor
- 22: bottom of inner container 12
- 24: non-metallic coating
- 26, 26': printed circuit board
- 28, 28': signal conditioning unit
- 30, 30': power source
- 32, 32': display driver
- 34, 34': display
- 36: cover
- 38, 38': sensor surface of IR temperature sensor 20, 20'
- 40, 40', 40", 40"', 40'''': lid
- 42, 42', 42", 42''', 42"": top part of lid
- 43, 43', 43'', 43''', 43'''': intermediate part of lid
- 44, 44', 44", 44''', 44'''': bottom part of lid
- 46: lower surface of lid
- 48: window
- 50: hollow space
- 52, 52', 52", 52''': peripheral side portion of the lid
- 54, 54', 54": heat conductive material
- 56, 56': Peltier element
- 58: thermally insulating material
- 60: cup
- 62: bottom part of cup 60
- 64: section comprising heat conductive material
- 66, 66': heat conductive material
- 68: heat conductive material
- 70: heat resistor
- 72: interior portion of lid
- 74: power inlet connector
- 76: hole
- 78: lid
- 80: temperature sensor module
- 82: interior portion of lid 78
- 84: bottom part of lid 78
- 86: intermediate part of lid 78
- 88: top part of lid 78
- 90: bottom part of module 80
- 92: lower surface of bottom part 90
- 94: window
- 96: hollow space
- 98: printed circuit board
- 100: signal conditioning unit
- 102: power source
- 104: display driver
- 106: display
- 108: liquid tight junction

## Claims

1. A lid (40) adapted to seal a thermally insulatable vessel, comprising
a top part (42) which, at least partly, is accessible and/or visible from above, a peripheral side portion (52) and a bottom part (44) which comprises a lower surface area (46), which, at least partly, is accessible from beneath, **characterized in that** said lower surface area (46) being provided with at least one window (48) which is at least transparent to IR radiation, or with a wall or a wall segment with an emissivity of IR radiation and/or heat conductivity sufficient to allow for an accurate and reliable temperature determination, said lid (40) at least further comprising at least one liquid tight hollow space (50), at least one side of which is, at least partially, formed by said window (48) or wall or wall segment, said window (48), or wall or wall segment, thereby at least partially confining said hollow space (50) and forming a part of the confinement of said hollow space (50), and an IR temperature sensor (20'), which is arranged in the hollow space (50) or at or in the inner wall of said hollow space (50), and which is adapted to detect IR radiation which enters the hollow space (50) via said window (48), or wall or wall segment.

2. The lid (78) according to claim 1, comprising
in its interior part (82) a temperature sensor module (80) which extends from the lower surface area of the lid (78) towards or up to the top part (88) of the lid (78), and which is adapted to be fixedly inserted into the lid (78) in a fluid-tight manner having at least one fluid-tight junction (108), said module (80) comprising a lower surface area (92) being provided with the window (94) which is at least transparent to IR radiation, or with the wall or the wall segment with an emissivity of IR radiation and/or heat conductivity sufficient to allow for an accurate and reliable temperature determination, or representing the window, wall or wall segment, said module (80) at least further comprising the liquid tight hollow space (96), at least one side of which is, at least partially, formed by said window (94) or wall or wall segment, said window (94), or wall or wall segment, thereby at least partially confining said hollow space (96) and forming a part of the confinement of said hollow space (96), and the IR temperature sensor (20"), which is arranged in the hollow space (96) or at or in the inner wall of said hollow space (96), and which is adapted to detect IR radiation which enters the hollow space (96) via said window (94), or wall or wall segment.

3. The lid (40) according to claim 1 or 2, wherein
the wall or wall segment is at least partially provided with a coating which comprises a non-metallic material on its interior surface.

4. The lid according to claim 1 or 2, wherein
the hollow space (50) is also gas tight.

5. The lid according to anyone of the preceding claims, wherein
the IR temperature sensor (20') is a thermopile thermosensor in the form of a thin film chip adapted to exploit the Seebeck effect.

6. The lid (40) according to anyone of the preceding claims, wherein
the IR temperature sensor (20') is directly opposite the window (48), or wall or wall segment.

7. The lid (40, 78) according to anyone of the preceding claims, wherein said lid (40) or said module (80) comprises a printed circuit board (26', 98) and/or a signal conditioning unit (28', 100) and/or a power supply unit (30', 102) and/or a display driver (32', 104), in particular a LCD display driver, and/or a display (34', 106), in particular a low current consumption display like a LCD display, said display being in particular incorporated into the surface of the top part (42, 88) of lid (40) or of module (80).

8. The lid according to anyone of the preceding claims, further comprising, in particular in its peripheral side portion, a heat conductive material, in particular a metal, at least part of which is attachable with an energy supply, in particular a Peltier element and/or a heating resistor.

9. The lid according to anyone of the preceding claims, further comprising at least one energy supply, in particular a Peltier element and/or a heating resistor, connected to or adjacent to at least a part of a first heat conductive material, and in particular to a second heat conductive material which is not in direct contact with the first heat conductive material and which is located at the outer surface or periphery of said lid.

## Patentansprüche

1. Deckel (40), geeignet für das Verschließen eines thermisch isolierenden Gefäßes, umfassend
einen oberen Teil (42), der zumindest zum Teil von oben zugänglich und/oder sichtbar ist, einen peripheren Seitenabschnitt (52) und einen unteren Teil (44), welcher einen unteren Oberflächenbereich (46) umfaßt, der, zumindest zum Teil, von unten zugänglich ist, **dadurch gekennzeichnet, daß** der untere Oberflächenbereich (46) zumindest ein Fenster (48) aufweist, das zumindest durchlässig für Infrarotstrahlung ist, oder eine Wand oder ein Wandsegment mit einem Emissionsvermögen von Infrarotstrahlung und/oder einer Wärmeleitfähigkeit, die ausreichend sind, um eine genaue und zuverlässige Temperaturbestimmung zu gestatten, wobei der Deckel (40) zumindest weiterhin zumindest einen flüssigkeitsdichten Hohlraum (50) umfaßt, von dem zumindest eine Seite, zumindest zum Teil, durch das Fenster (48) oder durch die Wand oder das Wandsegment ausgebildet wird, wobei das Fenster (48) oder die Wand oder das Wandsegment zumindest zum Teil den Hohlraum (50) begrenzen und einen Teil der Begrenzung des Hohlraumes (50) ausbilden, und einen Infrarottemperatursensor (20'), der im Hohlraum (50) oder an der Innenwand oder in der Innenwand des Hohlraumes (50) angeordnet ist, und der geeignet ist, Infrarotstrahlung zu detektieren, welche in den Hohlraum (50) über das Fenster (48) oder über die Wand oder das Wandsegment eintritt.

2. Deckel (78) nach Anspruch 1, umfassend
in seinem Innenteil (82) ein Temperatursensormodul (80), welches sich vom unteren Oberflächenbereich des Deckels (78) hin zum oder bis zum oberen Teil (88) des Deckels (78) erstreckt, und welches geeignet ist, fest in den Deckel (78) in einer flüssigkeitsdichten Weise eingefügt zu werden und das zumindest eine flüssigkeitsdichte Verbindungsstelle (108) aufweist, wobei das Modul (80) einen unteren Oberflächenbereich (92) umfaßt, der das Fenster (94) aufweist, das zumindest durchlässig für Infrarotstrahlung ist, oder die Wand oder das Wandsegment mit einem Emissionsvermögen von Infrarotstrahlung und/oder einer Wärmeleitfähigkeit, die ausreichend sind, um eine genaue und zuverlässige Temperaturbestimmung zu gestatten, oder das Fenster, die Wand oder das Wandsegment repräsentieren, wobei das Modul (80) zumindest weiterhin zumindest einen flüssigkeitsdichten Hohlraum (96) umfaßt, von dem zumindest eine Seite, zumindest zum Teil, durch das Fenster (94) oder durch die Wand oder das Wandsegment ausgebildet wird, wobei das Fenster (94) oder die Wand oder das Wandsegment zumindest zum Teil den Hohlraum (96) begrenzen und einen Teil der Begrenzung des Hohlraumes (96) ausbilden, und einen Infrarottemperatursensor (20"), der im Hohlraum (96) oder an der Innenwand oder in der Innenwand des Hohlraumes (96) angeordnet ist, und der geeignet ist, Infrarotstrahlung zu detektieren, welche in den Hohlraum (96) über das Fenster (94) oder über die Wand oder das Wandsegment eintritt.

3. Deckel (40) nach Anspruch 1 oder 2, **dadurch gekennzeichnet, daß**
die Wand oder das Wandsegment zumindest zum Teil eine Beschichtung aufweisen, die ein nicht-metallisches Material auf ihrer inneren Oberfläche umfaßt.

4. Deckel nach Anspruch 1 oder 2, **dadurch gekennzeichnet, daß**
der Hohlraum (50) ebenfalls gasdicht ist.

5. Deckel nach einem der vorangehenden Ansprüche, **dadurch gekennzeichnet, daß**
der Infrarottemperatursensor (20') ein Thermosäule-Thermosensor in Form eines Dünnschichtchips ist, der geeignet für die Ausnutzung des Seebeck-Effekts ist.

6. Deckel (40) nach einem der vorangehenden Ansprüche, **dadurch gekennzeichnet, daß** der Infrarottemperatursensor (20') sich direkt gegenüber dem Fenster (48) oder der Wand oder dem Wandsegment befindet.

7. Deckel (40, 78) nach einem der vorangehenden Ansprüche, **dadurch gekennzeichnet, daß** der Deckel (40) oder das Modul (80) eine gedruckte Leiterplatte (26', 98) und/oder eine Signalverarbeitungseinheit (28', 100) und/oder eine Stromversorgungseinheit (30', 102) und/oder einen Displaytreiber (32', 104), im besonderen einen LCD Displaytreiber und/oder ein Display (34', 106), im besonderen eine wenig Strom verbrauchende Anzeige, wie zum Beispiel ein LCD Display umfaßt, wobei das Display im besonderen in die Oberfläche des oberen Teils (42, 88) des Deckels (40) oder des Moduls (80) inkorporiert ist.

8. Deckel nach einem der vorangehenden Ansprüche, welcher des weiteren, im besonderen in seinem peripheren Seitenabschnitt, ein wärmeleitendes Material, im besonderen ein Metall umfaßt, von dem zumindest ein Teil mit einer Energieversorgung befestigbar ist, im besonderen ein Peltier-Element und/oder ein Heizwiderstand.

9. Deckel nach einem der vorangehenden Ansprüche, welcher weiterhin zumindest eine Energieversorgung umfaßt, im besonderen ein Peltier-Element und/oder einen Heizwiderstand, der mit zumindest einem Teil eines ersten wärmeleitenden Materials verbunden ist oder an dieses angrenzt, und im besonderen an ein zweites wärmeleitendes Material, welches nicht in direktem Kontakt mit dem ersten wärmeleitenden Material steht und sich an der äußeren Oberfläche oder der Peripherie des Deckels befindet.

## Revendications

1. Couvercle (40) adapté pour fermer de manière hermétique un récipient pouvant être isolé thermiquement, comportant
une partie supérieure (42) qui, au moins partiellement, est accessible et/ou visible d'en haut, une partie latérale périphérique (52) et une partie inférieure (44) comportant une aire de surface inférieure (46) qui, au moins partiellement, est accessible de dessous, **caractérisé en ce que** ladite aire de surface inférieure (46) est munie d'au moins une fenêtre (48) qui est au moins transparente à un rayonnement infrarouge (IR), ou d'une paroi ou d'un segment de paroi doté(e) d'une capacité d'émission de rayonnement IR et/ou d'une conductivité thermique suffisante(s) pour permettre une détermination de température précise et fiable, ledit couvercle (40) comportant au moins en outre au moins un espace creux étanche au liquide (50), dont au moins un côté est formé au moins partiellement par ladite fenêtre (48) ou ladite paroi ou ledit segment de paroi, en confinant ainsi au moins partiellement ledit espace creux (50) et en formant une partie du confinement dudit espace creux (50), et un capteur de température infrarouge (IR) (20'), qui est agencé dans l'espace creux (50) ou au niveau de la paroi intérieure dudit espace creux (50), ou dans celle-ci, et qui est adapté pour détecter un rayonnement IR qui entre dans l'espace creux (50) via ladite fenêtre (48), ou ladite paroi ou ledit segment de paroi.

2. Couvercle (78) selon la revendication 1, comportant
dans sa partie intérieure (82), un module de capteur de température (80) qui s'étend depuis la surface inférieure du couvercle (78) vers ou jusqu'à la partie supérieure (88) du couvercle (78), et qui est adapté pour être inséré de manière fixe dans le couvercle (78) de manière étanche au fluide, ayant au moins une jonction étanche au fluide (108), ledit module (80) comportant une aire de surface inférieure (92) étant munie de la fenêtre (94) qui est au moins transparente à un rayonnement IR, ou de la paroi ou du segment de paroi doté(e) d'une capacité d'émission de rayonnement IR et/ou d'une conductivité thermique suffisante(s) pour permettre une détermination de température précise et fiable, ou représentant la fenêtre, la paroi ou le segment de paroi, ledit module (80) comportant en outre au moins l'espace creux étanche au liquide (96) dont au moins un côté est formé au moins partiellement par ladite fenêtre (94) ou ladite paroi ou ledit segment de paroi, ladite fenêtre (94), ou ladite paroi ou ledit segment de paroi, confinant ainsi au moins partiellement ledit espace creux (96) et formant une partie du confinement dudit espace creux (96), et le capteur de température IR (20"), qui est agencé dans l'espace creux (96) ou au niveau de la paroi intérieure dudit espace creux (96), ou dans celle-ci, et qui est adapté pour détecter un rayonnement IR qui entre dans l'espace creux (96) via ladite fenêtre (94), ou ladite paroi ou ledit segment de paroi.

3. Couvercle (40) selon la revendication 1 ou 2, dans lequel
la paroi ou le segment de paroi est au moins partiellement muni(e) d'un revêtement qui comporte un matériau non métallique sur sa surface intérieure.

4. Couvercle selon la revendication 1 ou 2, dans lequel
l'espace creux (50) est également étanche au gaz.

5. Couvercle selon l'une quelconque des revendications précédentes, dans lequel
le capteur de température IR (20') est un thermocapteur à thermopile sous la forme d'une puce en film mince adaptée pour exploiter l'effet de Seebeck,

6. Couvercle (40) selon l'une quelconque des revendications précédentes, dans lequel
le capteur de température IR (20') est directement opposé à la fenêtre (48), ou à la paroi ou au segment de paroi.

7. Couvercle (40, 78) selon l'une quelconque des revendications précédentes, dans lequel ledit couvercle (40) ou ledit module (80) comporte une carte de circuit imprimé (26', 98) et/ou une unité de conditionnement de signal (28', 100) et/ou une unité d'alimentation électrique (30', 102) et/ou un dispositif d'attaque d'affichage (32', 104), en particulier un dispositif d'attaque d'affichage à cristaux liquides (LCD), et/ou un affichage (34', 106), en particulier un affichage à faible consommation de courant comme un affichage LCD, ledit affichage étant en particulier incorporé dans la surface de la partie supérieure (42, 88) du couvercle (40) ou du module (80).

8. Couvercle selon l'une quelconque des revendications précédentes, comportant en outre, en particulier dans sa partie latérale périphérique, un matériau conducteur thermique, en particulier un métal, dont au moins une partie peut être reliée à une alimentation en énergie, en particulier un élément de Peltier et/ou une résistance chauffante.

9. Couvercle selon l'une quelconque des revendications précédentes, comportant en outre au moins une alimentation en énergie, en particulier un élément de Peltier et/ou une résistance chauffante, reliée à au moins une partie d'un premier matériau conducteur thermique, ou adjacente à celle-ci, et en particulier à un second matériau conducteur thermique qui n'est pas en contact direct avec le premier matériau conducteur thermique, et qui est situé au niveau de la surface extérieure ou de la périphérie dudit couvercle.
